# EUROPÄISCHE PATENTSCHRIFT

(11) **EP 3 029 203 B1**
(45) Veröffentlichungstag und Bekanntmachung des Hinweises auf die Patenterteilung: **22.08.2018**
(21) Anmeldenummer: 15194946.8
(22) Anmeldetag: 17.11.2015
(51) Int. Cl.: E02B 1/00

(54) **VERFAHREN UND VORRICHTUNG ZUM BETRIEB EINER TECHNISCHEN ANLAGE IN EINEM FLIESSENDEN GEWÄSSER**
METHOD AND DEVICE FOR OPERATING A TECHNICAL FACILITY IN A FLOWING BODY OF WATER
PROCÉDÉ ET DISPOSITIF DE FONCTIONNEMENT D'UNE INSTALLATION TECHNIQUE DANS DES EAUX S'ÉCOULANT

(30) Priorität: 02.12.2014 DE 102014224673
(43) Veröffentlichungstag der Anmeldung: 08.06.2016
(73) Patentinhaber: Technische Universität München, 80333 München (DE)
(72) Erfinder: GEIGER, Franz, 82431 Kochel (DE)
(74) Vertreter: Hoefer & Partner Patentanwälte mbB

(56) Entgegenhaltungen:
- DE-A1- 3 219 867
- US-A- 2 860 600
- US-B1- 6 978 734

## Beschreibung

Die Erfindung betrifft ein Verfahren sowie eine Vorrichtung zum Betrieb einer technischen Anlage in einem fließenden Gewässer. Die technische Anlage ist insbesondere eine Turbine zur Stromerzeugung.

Unter Umweltgesichtspunkten ist ein entscheidender Nachteil von Wasserkraftwerken die Beschädigung von Lebewesen, insbesondere Fischen, durch die Turbinen. Um den Fischen einen gefahrlosen Abstieg zu ermöglichen, werden diese zum Beispiel mit speziellen Barrieren zu den Fischabstiegen geleitet. Dabei handelt es sich in der Regel um mechanische Barrieren, wie beispielsweise Gitter oder Rechen, die allerdings erst ab einer gewissen Fischgröße greifen. Teilweise versucht man, die Fische durch Verhaltensbarrieren von einem Turbineneintritt abzuhalten und zum Fischabstieg hinzuleiten. Solche Verhaltensbarrieren oder "Scheucheinrichtungen" funktionieren beispielsweise sensorisch über Licht, Schall, Elektrizität oder mechanisch. Auch können mechanische und verhaltensbasierte Ansätze kombiniert werden. Jedoch gelingt es nur in begrenztem Maße, die Fische von der Turbinenpassage abzuhalten, so dass vor allem kleinere Fische in die Turbine geraten und dort verletzt oder getötet werden können. US 6 978 734 A offenbart eine elektrische Fischbarriere zum Abschrecken von Fischen vom Einlaufen in eine Wasserzufuhr in einem Reservoir oder entlang eines Wasserwegs.

Es ist Aufgabe der Erfindung, ein Verfahren sowie eine entsprechende Vorrichtung zum Betrieb einer technischen Anlage in einem fließenden Gewässer anzugeben, die bei kostengünstiger Herstellung und wartungsarmem Betrieb die Schädigung von Lebewesen soweit als möglich verringern.

Die Lösung dieser Aufgabe erfolgt durch die Merkmale der unabhängigen Ansprüche. Die abhängigen Ansprüche haben vorteilhafte Ausgestaltungen der Erfindung zum Gegenstand.

Somit wird die Erfindung gelöst durch ein Verfahren zum Betrieb einer technischen Anlage in einem fließenden Gewässer, umfassend zumindest die beiden Schritte: (i) Betäuben von Lebewesen im Wasser oberstrom der technischen Anlage und/oder in der technischen Anlage, (ii) und Durchführen des Wassers samt der betäubten Lebewesen durch die technische Anlage.

Bevorzugt ist vorgesehen, dass die beschriebene technische Anlage eine Turbine ist und das Wasser samt der betäubten Lebewesen durch die Turbine geführt wird. Insbesondere bei Turbinen, die beispielsweise zur Erzeugung elektrischer Energie verwendet werden, kommt es zur Schädigung der Lebewesen. Jedoch ist es auch denkbar die erfindungsgemäße Betäubung bei anderen technischen Anlagen, wie beispielsweise Wasserrädern, anzuwenden.

Im Rahmen der Erfindung wurde beobachtet, dass die Schädigungsraten der Fische in einer Turbine mit dem Schwimmvermögen korrelieren. Die Erklärung dafür ist, dass Fische, die mit der Strömung durch die Turbine getrieben werden ("driften"), eine geringere Verweildauer in der Turbine haben als solche, die instinktgetrieben gegen die Strömung anschwimmen. Mit der kürzeren Verweildauer sinkt auch die Wahrscheinlichkeit, von einem Schaufelblatt des Laufrades der Turbine getroffen zu werden. Im Umkehrschluss ist also zu erwarten, dass ein betäubter Fisch von der Strömung mit höherer Wahrscheinlichkeit durch die Gefahrenzone hindurchgespült wird und die Wasserkraftanlage unverletzt passieren kann. Die Reduzierung des Schwimmvermögens erfolgt durch eine kurzzeitige Betäubung der Lebewesen. Dabei ist nicht ausschlaggebend, dass das Lebewesen vollständig betäubt ist. Vielmehr entscheidend ist, dass das Schwimmvermögen des Lebewesens kurzzeitig reduziert wird oder nicht vorhanden ist.

Im Rahmen der Erfindung ist dabei nicht vorgesehen, dass die betäubten Lebewesen aus dem Wasser gefischt werden und unter Umgehung der technischen Anlage ins Unterwasser transportiert werden. Vielmehr werden die betäubten Lebewesen durch die technische Anlage (z.B. die Turbine) hindurch vom Oberwasser ins Unterwasser befördert.

Für die Betäubung der Lebewesen wird vorteilhafterweise elektrischer Strom eingesetzt. Durch Anbringung entsprechender Elektroden vor und/oder in der technischen Anlage können die Lebewesen durch einen Elektroschock kurzzeitig betäubt werden. Alternativ zur elektrischen Betäubung sind auch andere Betäubungsmethoden, z.B. mittels Druckwellen oder Ultraschall möglich.

Oberstrom der technischen Anlage ist vorteilhafterweise ein Rechen (oder eine ähnliche mechanische Barriere) angeordnet. Die Lebewesen werden bevorzugt zwischen dem Rechen und der technischen Anlage betäubt. Den Rechen passieren nur Lebewesen bis zu einer definierten maximalen Größe. So kann die Dosierung der Betäubung auf diese Maximalgröße eingestellt werden. Alternativ oder ergänzend werden die Lebewesen in der technischen Anlage betäubt, vorzugsweise vor oder an der Durchtrittspassage/-stelle für das Wasser.

Für die Dosierung der Betäubung gibt es unterschiedliche Möglichkeiten:
Die Dosierung der Betäubung erfolgt insbesondere in Abstimmung der zu erwartenden maximalen Organismengröße. Diese maximale Größe wird durch die spezifische Population am konkreten Standort und deren Wanderbewegungen aber beispielsweise auch durch den ggf. vorgelagerten Rechen beeinflusst. Dabei kann auch berücksichtigt werden, dass gewisse Lebewesen besonders schützenswert sind, wobei dann die Betäubung speziell auf diese Lebewesen dosiert wird.

Vorteilhafterweise ist auch vorgesehen, zumindest eine Eigenschaft der Lebewesen zu erfassen und die Betäubung in Abhängigkeit der erfassten Eigenschaft zu dosieren. Beispielsweise wird die Größe oder das Gewicht der Lebewesen erfasst. Alternativ oder zusätzlich kann auch die Art oder Spezies der Lebewesen erfasst werden. Dieses Erfassen der Eigenschaft erfolgt beispielsweise mittels einer Kamera und der entsprechenden Auswertung über eine Software.

Zum einen kann über einen bestimmten Zeitraum eine gewisse Menge an Lebewesen erfasst werden und ein Durchschnitt gebildet werden. Die Dosierung der Betäubung wird dann entsprechend den Durchschnittswerten eingestellt. Zum anderen ist es möglich, einzelne, sich der technischen Anlage annähernde Lebewesen zu erfassen und die Betäubung jeweils entsprechend dem einzelnen Lebewesen zu dosieren.

Bei der technischen Anlage, insbesondere der Turbine, gibt es gewisse Bereiche, in denen geringere Schädigungsraten zu erwarten sind. Deshalb ist vorteilhafterweise vorgesehen, die Lebewesen vor der technischen Anlage durch zumindest ein Leitelement in einen definierten Bereich zu verdriften. Dadurch passieren die betäubten Lebewesen die technische Anlage in einem Strömungsbereich, in dem möglichst wenig Schädigung zu erwarten ist. Besonders bevorzugt wird die Betäubungsvorrichtung durch die Positionierung, Gestaltung und v.a. Polung der Elektroden einer elektrischen Betäubungseinrichtung umgesetzt. Sie kann beispielsweise in das zumindest eine Leitelement integriert sein.

Die Erfindung umfasst des Weiteren eine Vorrichtung zur Durchführung des soeben beschriebenen Verfahrens. Die Vorrichtung umfasst eine technische Anlage, beispielsweise eine Turbine, und eine Betäubungsvorrichtung zum Betäuben der Lebewesen oberstrom der technischen Anlage und/oder in der technischen Anlage. Die im Rahmen des erfindungsgemäßen Verfahrens beschriebenen vorteilhaften Ausgestaltungen und Unteransprüche finden entsprechend vorteilhafte Anwendung für die erfindungsgemäße Vorrichtung.

Insbesondere ist es vorgesehen, die Betäubungsvorrichtung in einem zur technischen Anlage führendem Rohr oder Kanal oder Schacht anzuordnen. Dadurch befindet sich die Betäubungsvorrichtung unmittelbar vor der technischen Anlage. Vor Turbinen sind üblicherweise Leitapparate vorgesehen. In oder an diesen Leitapparaten kann die Betäubungsvorrichtung vorteilhaft angebracht werden.

Weitere Einzelheiten, Vorteile und Merkmale der vorliegenden Erfindung ergeben sich aus nachfolgender Beschreibung von Ausführungsbeispielen anhand der Zeichnung. Es zeigen:
- Fig. 1: eine rein schematische Ansicht einer erfindungsgemäßen Vorrichtung zur Durchführung des erfindungsgemäßen Verfahrens, und
- Fig. 2 und 3: zwei Ausführungsbeispiele der erfindungsgemäßen Vorrichtung zur Durchführung des erfindungsgemäßen Verfahrens.

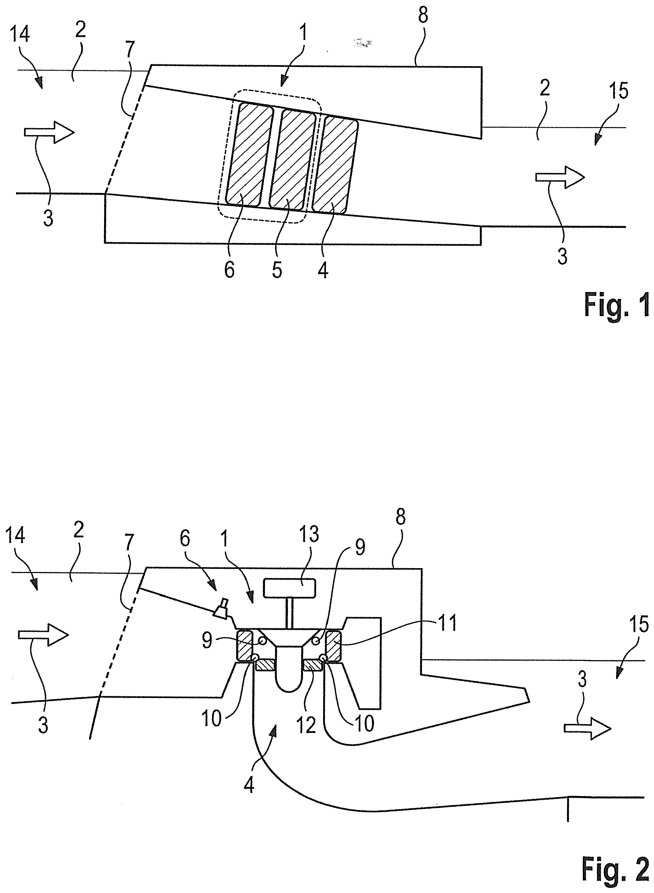

Fig. 1 zeigt rein schematisch eine Vorrichtung 1 zum Betrieb einer technischen Anlage 4 in einem fließenden Gewässer 2.

Im Detail zeigt Fig. 1 ein Bauwerk 8, insbesondere Staubauwerk, zwischen einem Oberwasser (14) und einem Unterwasser (15). Eine Fließrichtung 3 des fließenden Gewässers 2 ist eingezeichnet. Am Bauwerk 8 befindet sich die technische Anlage 4, ausgebildet als Turbine.

Unmittelbar vor der technischen Anlage 4 befindet sich eine Betäubungsvorrichtung 5. Die Betäubungsvorrichtung 5 betäubt die in Fließrichtung 3 des fließenden Gewässers 2 abwandernden Lebewesen mittels elektrischem Strom. Hierzu umfasst die Betäubungsvorrichtung 5 zumindest eine Elektrode. Die eine Elektrode kann beispielsweise elektrisch leitend mit einem metallenen Rohr/Kanal zusammenwirken. Alternativ können hier auch zwei oder mehrere Elektroden eingesetzt werden.

Oberstrom der technischen Anlage 4 befindet sich ein Rechen 7. Die Betäubung erfolgt vorteilhafterweise zwischen dem Rechen 7 und der technischen Anlage 4. Des Weiteren ist bevorzugt vorgesehen, vor der Betäubung die Lebewesen mittels einer Erfassungsvorrichtung 6, beispielsweise mit einer Kamera, zu erfassen. In Abhängigkeit erfasster Eigenschaften kann die Betäubung dosiert werden.

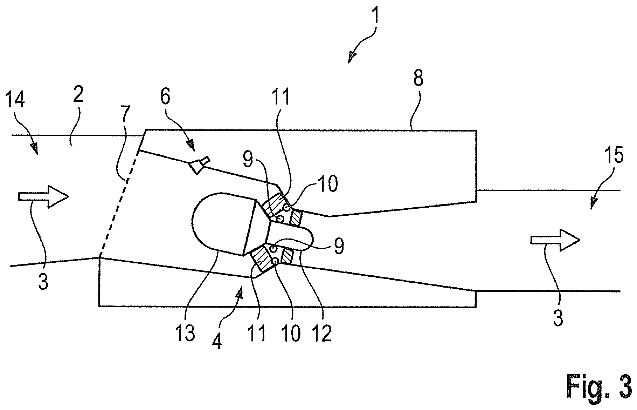

Figur 2 zeigt im Längsschnitt exemplarisch die Umsetzung der Vorrichtung 1 mittels Elektrobetäubung an einer klassischen Wasserkraftanlage mit vertikalachsiger Kaplanturbine. Figur 3 ist analog für eine annähernd horizontalachsige Bulb-Turbine ausgeführt.

Die technische Anlage 4 umfasst hier ein Laufrad 12, das mit einem Generator 13 antriebsverbunden ist. Dem Laufrad 12 ist ein Leitapparat 11 vorgelagert. Die Betäubungsvorrichtung umfasst eine Kathode 9 und eine Anode 10, jeweils bevorzugt ausgebildet als ringförmige Elektroden. Die Elektroden befinden sich hier bevorzugt zwischen Leitapparat 11 und Laufrad 12.

Die Gestaltung, Positionierung und Polung der Betäubungselektroden kann grundsätzlich auch anders gewählt werden. Die Betäubung hat oberstrom des Gefahrenbereichs (hier Laufrad 12 der Turbine) zu erfolgen, tendenziell derart, dass der Betäubungseffekt im Gefahrenbereich am stärksten ausgeprägt ist. Beim Beispiel der Elektrobetäubung erfolgt die Betäubung vorteilhaft möglichst nahe am Gefahrenbereich. Im Allgemeinen, z.B. bei anderen Betäubungsmethoden oder in Abstimmung mit der technischen Anlage 4, können auch andere Positionen gewählt werden. Falls der technischen Anlage 4 eine mechanische Barriere vorgeschalten ist (i. d. R. Grobrechen zum Schutz der technischen Anlage vor Treibgut, aber auch Feinrechen zum Fischschutz) ist eine Positionierung zwischen der Barriere und dem Gefahrenbereich vorteilhaft, mit einer Abstimmung der Betäubungsstärke auf die durch die mechanische Barriere vorgegebenen maximalen Organismengröße.

Abweichend zu den gezeigten Figuren muss die Anlage nicht zwingend in einem Bauwerk 8 untergebracht sein, sondern kann anderweitig durch-, unter- oder überströmt werden (z.B. VLH-Turbine, etc.).

Neben der vorstehenden schriftlichen Beschreibung der Erfindung wird zu deren ergänzender Offenbarung hiermit explizit auf die zeichnerische Darstellung der Erfindung in den Fig. 1 bis 3 Bezug genommen.

### Bezugszeichenliste

- 1: Vorrichtung
- 2: fließendes Gewässer
- 3: Fließrichtung
- 4: technische Anlage (Turbine)
- 5: Betäubungsvorrichtung
- 6: Erfassungsvorrichtung
- 7: Rechen
- 8: Bauwerk
- 9: Kathode
- 10: Anode
- 11: Leitapparat
- 12: Laufrad
- 13: Generator
- 14: Oberwasser
- 15: Unterwasser

## Patentansprüche

1. Verfahren zum Betrieb einer technischen Anlage (4) in einem fließenden Gewässer (2), umfassend zumindest die folgenden Schritte:
• Betäuben von Lebewesen im Wasser (2) oberstrom der technischen Anlage (4) und/oder in der technischen Anlage (4), und
• Durchführen des Wassers (2) samt betäubter Lebewesen durch die technische Anlage (4).

2. Verfahren nach Anspruch 1, **dadurch gekennzeichnet, dass** die technische Anlage (4) eine Turbine ist, und das Wasser (2) samt betäubter Lebewesen durch die Turbine geführt wird.

3. Verfahren nach einem der vorhergehenden Ansprüche, **dadurch gekennzeichnet, dass** die Lebewesen elektrisch oder mittels Ultraschal betäubt werden.

4. Verfahren nach einem der vorhergehenden Ansprüche, **dadurch gekennzeichnet, dass** oberstrom der technischen Anlage (4) ein Rechen (7) angeordnet ist und die Lebewesen zwischen dem Rechen (7) und der technischen Anlage (4) betäubt werden.

5. Verfahren nach einem der vorhergehenden Ansprüche, **dadurch gekennzeichnet, dass** zumindest eine Eigenschaft, insbesondere Größe oder Gewicht, der Lebewesen erfasst wird und die Betäubung in Abhängigkeit der erfassten Eigenschaft dosiert wird.

6. Verfahren nach Anspruch 5, **dadurch gekennzeichnet, dass** die zumindest eine Eigenschaft am einzelnen Lebewesen vor der Betäubung erfasst wird und die Betäubung des einzelnen Lebewesens entsprechend dosiert wird.

7. Verfahren nach einem der vorhergehenden Ansprüche, **dadurch gekennzeichnet, dass** die Lebewesen vor der technischen Anlage (4) durch zumindest ein Leitelement in einen definierten Strömungsbereich verdriftet werden.

8. Vorrichtung zur Durchführung des Verfahrens nach einem der vorhergehenden Ansprüche, umfassend eine technische Anlage (4) in einem fließenden Gewässer (2) und eine Betäubungsvorrichtung (5) zum Betäuben von Lebewesen im Wasser (2) oberstrom der technischen Anlage (4) und/oder in der technischen Anlage (4), wobei das Wasser (2) samt betäubter Lebewesen durch die technische Anlage (4) durchführbar ist.

9. Vorrichtung nach Anspruch 8, **dadurch gekennzeichnet, dass** die Betäubungsvorrichtung (5) in einem zur technischen Anlage (4) führendem Rohr oder Kanal oder Schacht angeordnet ist.

## Claims

1. A method for operating a technical facility (4) in a flowing body of water (2), comprising at least the following steps:
• stunning of living beings in the water (2) upstream of the technical facility (4) and/or in the technical facility (4), and
• passing the water (2) along with the stunned living beings through the technical facility (4).

2. The method according to claim 1, **characterised in that** the technical facility (4) is a turbine, and the water (2) along with the stunned living beings is passed through the turbine.

3. The method according to any one of the preceding claims, **characterised in that** the living beings are stunned electrically or using ultrasound.

4. The method according to any one of the preceding claims, **characterised in that** a rake (7) is arranged upstream of the technical facility (4), and the living beings are stunned between the rake (7) and the technical facility (4).

5. The method according to any one of the preceding claims, **characterised in that** at least one characteristic, in particular size or weight, of the living beings is recorded, and the stunning is dosed depending on the recorded characteristic.

6. The method according to claim 5, **characterised in that** the at least one characteristic is recorded of the individual living being prior to the stunning, and the stunning of the individual living being is dosed accordingly.

7. The method according to any one of the preceding claims, **characterised in that** the living beings are drifted into a defined flow area in front of the technical facility (4) by at least one guide element.

8. A device for performing the method according to any one of the preceding claims, comprising a technical facility (4) in a flowing body of water (2) and a stunning device (5) for stunning living beings in the water (2) upstream of the technical facility (4) and/or in the technical facility (4), wherein the water (2) along with the stunned living beings can be passed through the technical facility (4).

9. The device according to claim 8, **characterised in that** the stunning device (5) is arranged in a pipe or channel or shaft leading to the technical facility (4) .

## Revendications

1. Procédé servant à faire fonctionner une installation technique (4) dans des eaux courantes (2), comprenant au moins les étapes suivantes :
- engourdissement d'êtres vivants dans l'eau (2) en amont de l'installation technique (4) et/ou dans l'installation technique (4), et
- passage de l'eau (2) y compris les êtres vivants engourdis à travers l'installation technique (4).

2. Procédé selon la revendication 1, **caractérisé en ce que** l'installation technique (4) est une turbine, et l'eau (2) y compris les êtres vivants engourdis sont guidés à travers la turbine.

3. Procédé selon l'une quelconque des revendications précédentes, **caractérisé en ce que** les êtres vivants sont engourdis de manière électrique ou au moyen d'ultrasons.

4. Procédé selon l'une quelconque des revendications précédentes, **caractérisé en ce qu'**un râteau (7) est disposé en amont de l'installation technique (4), et les êtres vivants sont engourdis entre le râteau (7) et l'installation technique (4).

5. Procédé selon l'une quelconque des revendications précédentes, **caractérisé en ce qu'**au moins une propriété, en particulier la taille ou le poids, des êtres vivants est détectée, et l'engourdissement est dosé en fonction de la propriété détectée.

6. Procédé selon la revendication 5, **caractérisé en ce que** l'au moins une propriété au niveau de l'être vivant individuel est détectée avant l'engourdissement, et l'engourdissement de l'être vivant individuel est dosé de manière correspondante.

7. Procédé selon l'une quelconque des revendications précédentes, **caractérisé en ce que** les êtres vivants sont entraînés avant l'installation technique (4) par au moins un élément conducteur dans une zone d'écoulement définie.

8. Dispositif servant à mettre en oeuvre le procédé selon l'une quelconque des revendications précédentes, comprenant une installation technique (4) dans des eaux courantes (2) et un dispositif d'engourdissement (5) servant à engourdir des êtres vivants dans l'eau (2) en amont de l'installation technique (4) et/ou dans l'installation technique (4), dans lequel l'eau (2) y compris les êtres vivants engourdis peuvent passer à travers l'installation technique (4).

9. Dispositif selon la revendication 8, **caractérisé en ce que** le dispositif d'engourdissement (5) est disposé dans un tuyau ou un canal ou un puits menant à l'installation technique (4).
